# EUROPEAN PATENT APPLICATION

(11) **EP 2 395 778 A1**
(43) Date of publication of application: **14.12.2011**
(21) Application number: 10165522.3
(22) Date of filing: 10.06.2010
(51) Int. Cl.: H04W 8/18, H04W 8/20, H04W 88/10

(54) **Customization of near field communication based services according to mobile subscriber preferences**

(71) Applicant: Teliasonera AB, 106 63 Stockholm (SE)
(72) Inventor: Laukkanen, Mikko, 02630, Espoo (FI); Suikkanen, Jukka, 02320, Espoo (FI); Paananen, Jorma, 00100, Helsinki (FI); Jurvanen, Tuukka, 90520, Oulu (FI); Jernberg, Juha, 90550, Oulu (FI)
(74) Representative: Helino, Timo Kalervo

(57) **Abstract**

The invention allows user specific customization of the services provided to the end users of Near Field Communication (NFC) technology based applications. An NFC tag identification is read with a mobile terminal device. A service request message service request message comprising the read tag identification and an MSISDN of the SIM of the mobile terminal device and requesting a service associated with the read NFC tag identification is sent to a service management network element. In response, an over-the-air request message addressed to the MSISDN and requesting subscriber preference information for the NFC based service is sent to the mobile terminal device. The requested subscriber preference information is fetched from the SIM. A preferences message comprising the fetched subscriber preference information is sent from the mobile terminal device to the service management network element.

## Description

### BACKGROUND OF THE INVENTION:

### Field of the Invention:

The invention relates generally to mobile telecommunications. In particular, the invention relates to a method of providing mobile subscriber preferences for near field communication based services, a method of providing near field communication based services according to subscriber preferences, and to a mobile terminal device, a service management network element and computer programs implementing the same.

### Description of the Related Art:

Near Field Communication (NFC) is a short-range wireless connectivity technology standard designed for intuitive, simple, and safe communication between electronic devices. NFC communication is enabled by bringing two NFC-compatible devices within a few centimeters of one another. The technology is an extension of the ISO/IEC 14443 proximity-card standard that combines the interface of a smartcard and a reader into a single device.

NFC is intended for usage in e.g. mobile phones. Applications of NFC technology include contactless transactions such as payment and transit ticketing, simple and fast data transfers including electronic business cards, and access to online digital content.

While NFC technology enables intuitive, simple and safe communication between electronic devices, its current implementations do have a significant drawback in that they do not allow user specific customization of the provided services. Therefore, touching an NFC tag to access a service will result in exactly the same service experience or content regardless of the end user touching the tag.

Therefore, an object of the present invention is to alleviate the problems described above and to introduce a solution that allows user specific customization of the services provided to the end users of NFC technology based applications.

### SUMMARY OF THE INVENTION

A first aspect of the present invention is a method of providing mobile subscriber preferences for near field communication based services. A tag identification associated with a near field communication tag is read with a mobile telephony enabled mobile terminal device. A service request message is sent from the mobile terminal device to a service management network element. The service request message requests a service that is associated with the tag identification, and the service request message comprises the read tag identification. An over-the-air request message that is addressed to a subscriber identification associated with a subscriber identity module of the mobile terminal device is received at the mobile terminal device. The over-the-air request message requests subscriber preference information for the near field communication based service. The requested subscriber preference information is fetched from a storage associated with the subscriber identity module. A preferences message that comprises the subscriber preference information is sent from the mobile terminal device to the service management network element.

A second aspect of the present invention is a method of providing near field communication based services according to subscriber preferences. A service request message is received at a service management network element. The service request message requests a service associated with a tag identification. The tag identification is associated with a near field communication tag, and the tag identification was read with a mobile telephony enabled mobile terminal device. The service request message comprises the tag identification and a subscriber identification associated with a subscriber identity module of the mobile terminal device. The tag identification is mapped to a network address of its associated service. An over-the-air request message is sent from the service management network element to the mobile terminal device. The over-the-air request message is addressed to the subscriber identification, and the over-the-air request message requests subscriber preference information for the near field communication based service. A preferences message that comprises the subscriber preference information is received at the service management network element. The provision of the requested service is initialized according to the received subscriber preference information.

A third aspect of the present invention is a mobile terminal device that is mobile telephony enabled. The mobile terminal device comprises a means for reading a tag identification associated with a near field communication tag. The mobile terminal device further comprises a means for sending, to a service management network element, a service request message requesting a service associated with the tag identification, the service request message comprising the tag identification. The mobile terminal device further comprises a means for receiving an over-the-air request message addressed to a subscriber identification associated with a subscriber identity module of the mobile terminal device and requesting subscriber preference information for the near field communication based service. The mobile terminal device further comprises a means for fetching the requested subscriber preference information from a storage associated with the subscriber identity module. The mobile terminal device further comprises a means for sending, to the service management network element, a preferences message comprising the subscriber preference information.

A fourth aspect of the present invention is a mobile terminal device that is mobile telephony enabled. The mobile terminal device comprises a tag identification reader configured to read a tag identification associated with a near field communication tag. The mobile terminal device further comprises a service request message sender configured to send, to a service management network element, a service request message requesting a service associated with the tag identification, the service request message comprising the tag identification. The mobile terminal device further comprises an over-the-air request message receiver configured to receive an over-the-air request message addressed to a subscriber identification associated with a subscriber identity module of the mobile terminal device and requesting subscriber preference information for the near field communication based service. The mobile terminal device further comprises a subscriber preference information fetcher configured to fetch the requested subscriber preference information from a storage associated with the subscriber identity module. The mobile terminal device further comprises a preferences message sender configured to send, to the service management network element, a preferences message comprising the subscriber preference information.

A fifth aspect of the present invention is a service management network element. The service management network element comprises a means for receiving a service request message requesting a service associated with a tag identification associated with a near field communication tag and read with a mobile telephony enabled mobile terminal device, the service request message comprising the tag identification and a subscriber identification associated with a subscriber identity module of the mobile terminal device. The service management network element further comprises a means for mapping the tag identification to a network address of its associated service. The service management network element further comprises a means for sending, to the mobile terminal device, an over-the-air request message addressed to the subscriber identification and requesting subscriber preference information for the near field communication based service. The service management network element further comprises a means for receiving a preferences message comprising the subscriber preference information. The service management network element further comprises a means for initializing the provision of the requested service according to the received subscriber preference information.

A sixth aspect of the present invention is a service management network element. The service management network element comprises a service request message receiver configured to receive a service request message requesting a service associated with a tag identification associated with a near field communication tag and read with a mobile telephony enabled mobile terminal device, the service request message comprising the tag identification and a subscriber identification associated with a subscriber identity module of the mobile terminal device. The service management network element further comprises a tag identification mapper configured to map the tag identification to a network address of its associated service. The service management network element further comprises an over-the-air request message sender configured to send, to the mobile terminal device, an over-the-air request message addressed to the subscriber identification and requesting subscriber preference information for the near field communication based service. The service management network element further comprises a preferences message receiver configured to receive a preferences message comprising the subscriber preference information. The service management network element further comprises a service initializer configured to initialize the provision of the requested service according to the received subscriber preference information.

A seventh aspect of the present invention is a computer program for providing mobile subscriber preferences for near field communication based services. The computer program comprises instructions which, when run in a mobile telephony enabled mobile terminal device, cause the mobile terminal device to perform the steps of:
reading, with a mobile telephony enabled mobile terminal device, a tag identification associated with a near field communication tag;
sending, from the mobile terminal device to a service management network element, a service request message requesting a service associated with the tag identification, the service request message comprising the tag identification;
receiving, at the mobile terminal device, an over-the-air request message addressed to a subscriber identification associated with a subscriber identity module of the mobile terminal device and requesting subscriber preference information for the near field communication based service;
fetching the requested subscriber preference information from a storage associated with the subscriber identity module; and
sending, from the mobile terminal device to the service management network element, a preferences message comprising the subscriber preference information.

A eighth aspect of the present invention is a computer program for providing near field communication based services according to subscriber preferences. The computer program comprises instructions which, when run in a service management network element, cause the service management network element to perform the steps of:
receiving, at a service management network element, a service request message requesting a service associated with a tag identification associated with a near field communication tag and read with a mobile telephony enabled mobile terminal device, the service request message comprising the tag identification and a subscriber identification associated with a subscriber identity module of the mobile terminal device;
mapping the tag identification to a network address of its associated service;
sending, from the service management network element to the mobile terminal device, an over-the-air request message addressed to the subscriber identification and requesting subscriber preference information for the near field communication based service;
receiving, at the service management network element, a preferences message comprising the subscriber preference information; and
initializing the provision of the requested service according to the received subscriber preference information.

In an embodiment of the invention, the service request message further comprises the subscriber identification as the service request message is being sent from mobile terminal device. Alternatively, the subscriber identification is included in the service request message by the network after the service request message has been sent from mobile terminal device.

In an embodiment of the invention, the subscriber identification comprises a mobile subscriber integrated services digital network number.

In an embodiment of the invention, the over-the-air request message comprises a short message service -message.

In an embodiment of the invention, the network address comprises a uniform resource locator.

In an embodiment of the invention, the tag identification is further mapped to at least one contextual parameter.

In an embodiment of the invention, the means for sending the service request message / the service request message sender comprises at least one of a mobile web browser and a client application.

In an embodiment of the invention, at least one of the means for receiving the over-the-air request message / the over-the-air request message receiver and the means for fetching the subscriber preference information / the subscriber preference information fetcher is comprised in an application programming interface.

It is to be understood that the aspects and embodiments of the invention described above may be used in any combination with each other. Several of the aspects and embodiments may be combined together to form a further embodiment of the invention. A method, a mobile terminal device, a service management network element, or a computer program which is an aspect of the invention may comprise at least one of the embodiments of the invention described above.

The invention allows user specific customization of the services provided to the end users of NFC technology based applications. More particularly, the invention enables enriching NFC based services with end user's personal preference information from the UICC / SIM card of the mobile terminal device of the end user. Furthermore, the invention utilizes over-the-air technology so that the preference information transfer is automatic without requiring any user input. When an end user touches an NFC-tag with a mobile phone in order to access a service, the personal preference information is attached to the service request. Once the request arrives at the service provider, the service provider is free to use the profile information in any way in order to personalize the provided service based on that personal preference information. This in turn makes it possible for the service providers to tailor and personalize their service experience based on the end user using the service. Furthermore, as the personal preferences are dynamic, that is, they can change over time, the personalized service experience is also able to adapt based on the current preferences.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a signaling diagram illustrating methods according to an embodiment of the invention, and
**Fig. 2** is a block diagram illustrating a mobile terminal device and a service management network element according to an embodiment of the invention as deployed in a communications network.

### DETAILED DESCRIPTION OF THE INVENTION

Reference will now be made in detail to the embodiments of the present invention, examples of which are illustrated in the accompanying drawings.

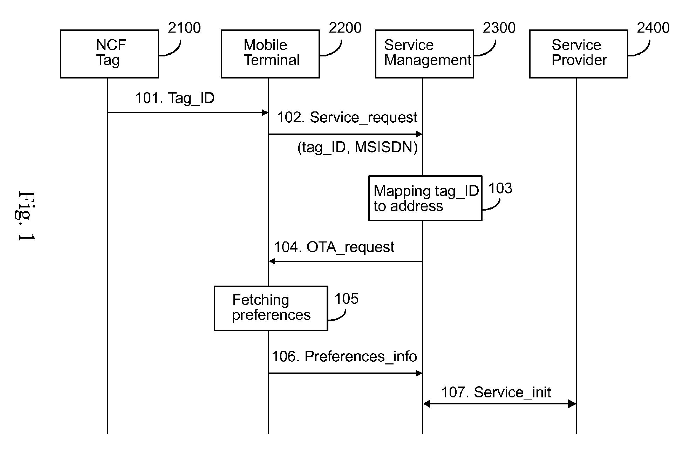

Figure 1 is a signaling diagram illustrating methods according to an embodiment of the invention.

At step 101, a tag identification associated with a near field communication tag 2100 is read with a mobile telephony enabled mobile terminal device 2200.

At step 102, a service request message is sent from the mobile terminal device 2200 to a service management network element 2300. The service request message requests a service that is associated with the tag identification, and the service request message comprises the read tag identification. In an embodiment of the invention, the service request message further comprises the subscriber identification as the service request message is being sent from mobile terminal device 2200. Alternatively, the subscriber identification is included in the service request message by the network after the service request message has been sent from mobile terminal device 2200. Also at step 102, the service request message is received at the service management network element 2300.

The tag identification is mapped to a network address of its associated service, step 103. In an embodiment, the tag identification may also be mapped to one or more contextual parameters, such as e.g. location and/or time information. At step 104, an over-the-air request message is sent from the service management network element 2300 to the mobile terminal device 2200. The over-the-air request message is addressed to the subscriber identification, and the over-the-air request message requests subscriber preference information for the near field communication based service. Also at step 104, the over-the-air request message is received at the mobile terminal device 2200. Using over-the-air technology in this manner allows the preference information transfer to be automatic in the sense that it does not require any attention or input form the end user, i.e. the subscriber.

The requested subscriber preference information is fetched from a storage associated with the subscriber identity module of the mobile terminal device 2200, step 105. At step 106, a preferences message that comprises the subscriber preference information is sent from the mobile terminal device 2200 to the service management network element 2300. Also at step 106, the preferences message is received at the service management network element 2300. The subscriber preference information includes information about the subscriber's preferences in relation to the requested service. The subscriber preference information may be in the form of e.g. a profile.

The provision of the requested service is initialized according to the received subscriber preference information, step 107. The service management network element 2300 may e.g. forward the subscriber preference information to a service provider network element 2400 which then proceeds to set up the requested service in accordance with the subscriber preference information. Furthermore, the service management network element 2300 may act as an intermediary between the mobile terminal device 2200 and the service provider network element 2400 during the service provision, or alternatively, the service management network element 2300 may provide the mobile terminal device 2200 and the service provider network element 2400 their respective address information so that they can connect directly to each other for the service provision. For example, the service management network element 2300 may provide the network address mapped in step 103 (which may be a network address associated with the service provider network element 2400) to the mobile terminal device 2200 so that the mobile terminal device 2200 may contact the service provider network element 2400 directly, i.e. without further involving the service management network element 2300.

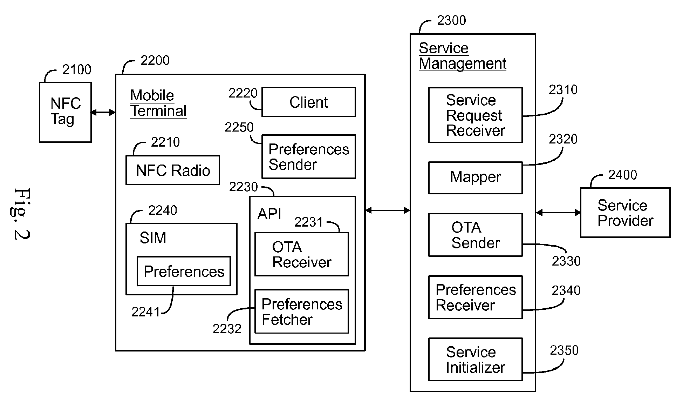

Figure 2 is a block diagram illustrating a mobile terminal device and a service management network element according to an embodiment of the invention as deployed in a communications network. The arrangement of Figure 2 comprises a near field communication (NFC) tag 2100, a mobile terminal device 2200 that is mobile telephony enabled, a service management network element 2300, and a service provider network element 2400. The mobile telephony enabled mobile terminal device 2200 may be e.g. a mobile telephone or a smart phone equipped with NFC and OTA (over-the-air) technologies.

The mobile terminal device 2200 and the service management network element 2300 are communicatively connected to each other via e.g. a mobile telecommunications network (such as e.g. a Global System for Mobile Communications (GSM) network, a 3rd Generation Partnership Project (3GPP), and/or a code division multiple access (CDMA) based network including wideband code division multiple access (W-CDMA) based networks and international mobile telecommunications-2000 (IMT-2000) based networks) that includes packet data transfer means, such as e.g. general packet radio service (GPRS). In addition, the mobile telecommunications network as well as the mobile terminal device 2200 and the service management network element 2300 are configured to handle over-the-air (OTA) messages.

The service management network element 2300 and the service provider network element 2400 are communicatively connected to each other via e.g. a packet data network, such as the Internet.

The mobile terminal device 2200 comprises a means 2210 for reading a tag identification associated with a near field communication tag 2100. The means 2210 may be e.g. an internal NFC radio component arranged in the mobile terminal device 2200. Alternatively, the means 2210 may be e.g. an external NFC radio component communicatively connected to the mobile terminal device 2200.

The mobile terminal device 2200 further comprises a means 2220 for sending, to the service management network element 2300, a service request message requesting a service associated with the tag identification, the service request message comprising the tag identification. In an embodiment of the invention, the means 2220 for sending the service request message comprises at least one of a mobile web browser and a client application. The client application may be e.g. a Java MIDlet.

In an embodiment of the invention, the service request message further comprises the subscriber identification as the service request message is being sent from mobile terminal device 2200. Alternatively, the subscriber identification is included in the service request message by the mobile telecommunications network (or more particularly, by e.g. a network access point) after the service request message has been sent from mobile terminal device 2200 and before it is received by the service management network element 2300. In an embodiment of the invention, the subscriber identification comprises a mobile subscriber integrated services digital network number (MSISDN). In an embodiment of the invention, the service request message may be in the form of e.g. a HTTP (hypertext transfer protocol) request.

The mobile terminal device 2200 further comprises a means 2231 for receiving an over-the-air request message addressed to a subscriber identification associated with a subscriber identity module 2240 of the mobile terminal device 2200 and requesting subscriber preference information for the near field communication based service.

As is known to those skilled in the art, in the context of mobile telecommunications, the term "over-the-air (OTA)" refers to a technology typically used by mobile network operators to communicate with, download applications to, and manage a SIM card without being connected physically to the card. In general, the term OTA implies the use of wireless mechanisms to send provisioning data or update packages for firmware or software updates to a mobile device - this is so that the user does not have to go to a store or a service center to have applications provisioned, parameters changed or firmware or software updated. However, the use of OTA technology is not limited to these purposes. Rather, it can be used for other functions also, as in the present invention.

In an embodiment of the invention, the over-the-air request message comprises a short message service (SMS) -message. In an embodiment of the invention, the means 2231 for receiving the over-the-air request message is implemented by means of an application programming interface (API) 2230 arranged in the mobile terminal device 2200. The mobile terminal device 2200 further comprises a means 2232 for fetching the requested subscriber preference information from a storage 2241 associated with the subscriber identity module 2240. In an embodiment of the invention, the means 2232 for fetching the requested subscriber preference information is also implemented by means of the application programming interface (API) 2230 arranged in the mobile terminal device 2200.

It is to be understood that herein the term "subscriber identity module" is used to refer to SIM cards used on GSM mobile terminal devices as well as to universal integrated circuit cards (UICC) used in 3GPP mobile terminal devices and to removable user identity module (R-UIM) cards used in CDMA-based mobile terminal devices.

The mobile terminal device 2200 further comprises a means 2250 for sending, to the service management network element 2300, a preferences message comprising the subscriber preference information.

The service management network element 2300 comprises a means 2310 for receiving the service request message requesting the service associated with the tag identification associated with the near field communication tag 2100 and read with the mobile telephony enabled mobile terminal device 2200, the service request message comprising the tag identification and a subscriber identification associated with the subscriber identity module 2240 of the mobile terminal device 2200.

The service management network element 2300 further comprises a means 2320 for mapping the tag identification to a network address of its associated service (e.g. a network address associated with the service provider network element 2400). In an embodiment of the invention, the network address comprises a uniform resource locator (URL). In an embodiment of the invention, the tag identification is further mapped to at least one contextual parameter, such as e.g. location and/or time information.

The service management network element 2300 further comprises a means 2330 for sending, to the mobile terminal device 2200, the over-the-air request message addressed to the subscriber identification and requesting subscriber preference information for the near field communication based service.

The service management network element 2300 further comprises a means 2340 for receiving the preferences message comprising the subscriber preference information. The service management network element 2300 further comprises a means 2350 for initializing the provision of the requested service according to the received subscriber preference information.

The exemplary embodiments can include, for example, any suitable servers, personal digital assistants (PDAs), Internet appliances, handheld devices, cellular telephones, smart phones, wireless devices, other devices, and the like, capable of performing the processes of the exemplary embodiments. The devices and subsystems of the exemplary embodiments can communicate with each other using any suitable protocol and can be implemented using one or more programmed computer systems or devices.

One or more interface mechanisms can be used with the exemplary embodiments, including, for example, Internet access, telecommunications in any suitable form (e.g., voice, modem, and the like), wireless communications media, and the like. For example, employed communications networks or links can include one or more wireless communications networks, cellular communications networks, 3G communications networks, Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magnetooptical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions. Computer code devices of the exemplary embodiments of the present inventions can include any suitable interpretable or executable code mechanism, including but not limited to scripts, interpretable programs, dynamic link libraries (DLLs), Java classes and applets, complete executable programs, Common Object Request Broker Architecture (CORBA) objects, and the like. Moreover, parts of the processing of the exemplary embodiments of the present inventions can be distributed for better performance, reliability, cost, and the like.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

## Claims

1. A method of providing mobile subscriber preferences for near field communication based services, the method comprising:
reading (101), with a mobile telephony enabled mobile terminal device, a tag identification associated with a near field communication tag; and
sending (102), from said mobile terminal device to a service management network element, a service request message requesting a service associated with said tag identification, said service request message comprising said tag identification;
**characterized in that** the method further comprises:
receiving (104), at said mobile terminal device, an over-the-air request message addressed to a subscriber identification associated with a subscriber identity module of said mobile terminal device and requesting subscriber preference information for said near field communication based service;
fetching (105) said requested subscriber preference information from a storage associated with said subscriber identity module; and
sending (106), from said mobile terminal device to said service management network element, a preferences message comprising said subscriber preference information.

2. The method according to claim 1, **characterized in that** said service request message further comprises said subscriber identification.

3. A method of providing near field communication based services according to subscriber preferences, the method comprising:
receiving (102), at a service management network element, a service request message requesting a service associated with a tag identification associated with a near field communication tag and read with a mobile telephony enabled mobile terminal device, said service request message comprising said tag identification and a subscriber identification associated with a subscriber identity module of said mobile terminal device; and
mapping (103) said tag identification to a network address of its associated service;
**characterized in that** the method further comprises:
sending (104), from said service management network element to said mobile terminal device, an over-the-air request message addressed to said subscriber identification and requesting subscriber preference information for said near field communication based service;
receiving (106), at said service management network element, a preferences message comprising said subscriber preference information; and
initializing (107) the provision of said requested service according to said received subscriber preference information.

4. The method according to claim 3, **characterized in that** said mapping (103) further comprises mapping (103) said tag identification to at least one contextual parameter.

5. A mobile telephony enabled mobile terminal device (2200), comprising:
a means for reading (2210) a tag identification associated with a near field communication tag; and
a means for sending (2220), to a service management network element (2300), a service request message requesting a service associated with said tag identification, said service request message comprising said tag identification;
**characterized in that** the mobile terminal device (2200) further comprises:
a means for receiving (2231) an over-the-air request message addressed to a subscriber identification associated with a subscriber identity module (2240) of said mobile terminal device (2200) and requesting subscriber preference information for said near field communication based service;
a means for fetching (2232) said requested subscriber preference information from a storage (2241) associated with said subscriber identity module (2240); and
a means for sending (2250), to said service management network element (2300), a preferences message comprising said subscriber preference information.

6. The mobile terminal device (2200) according to claim 5, **characterized in that** said service request message further comprises said subscriber identification.

7. The mobile terminal device (2200) according to claim 6, **characterized in that** said subscriber identification comprises a mobile subscriber integrated services digital network number.

8. The mobile terminal device (2200) according to any of the claims 5-7, **characterized in that** said means for sending (2220) said service request message comprises at least one of a mobile web browser and a client application.

9. The mobile terminal device (2200) according to any of the claims 5-8, **characterized in that** said over-the-air request message comprises a short message service -message.

10. The mobile terminal device (2200) according to any of the claims 5-9, **characterized in that** at least one of said means for receiving (2231) said over-the-air request message and said means for fetching (2232) is comprised in an application programming interface (2230).

11. A service management network element (2300), comprising:
a means for receiving (2310) a service request message requesting a service associated with a tag identification associated with a near field communication tag and read with a mobile telephony enabled mobile terminal device (2200), said service request message comprising said tag identification and a subscriber identification associated with a subscriber identity module (2240) of said mobile terminal device (2200); and
a means for mapping (2320) said tag identification to a network address of its associated service;
**characterized in that** the service management network element (2300) further comprises:
a means for sending (2330), to said mobile terminal device (2200), an over-the-air request message addressed to said subscriber identification and requesting subscriber preference information for said near field communication based service;
a means for receiving (2340) a preferences message comprising said subscriber preference information; and
a means for initializing (2350) the provision of said requested service according to said received subscriber preference information.

12. The service management network element (2300) according to claim 11, **characterized in that** said subscriber identification further comprises a mobile subscriber integrated services digital network number.

13. The service management network element (2300) according to claim 11 or 12, **characterized in that** said over-the-air request message comprises a short message service -message.

14. The service management network element (2300) according to any of the claims 11-13, **characterized in that** said network address comprises a uniform resource locator.

15. The service management network element (2300) according to any of the claims 11-14, **characterized in that** said means for mapping (2320) is further configured to map said tag identification to at least one contextual parameter.

16. A computer program for providing mobile subscriber preferences for near field communication based services, the computer program comprising instructions which, when run in a mobile telephony enabled mobile terminal device, cause the mobile terminal device to perform the steps of:
reading (101), with a mobile telephony enabled mobile terminal device, a tag identification associated with a near field communication tag; and
sending (102), from said mobile terminal device to a service management network element, a service request message requesting a service associated with said tag identification, said service request message comprising said tag identification;
**characterized in that** the instructions further cause the mobile terminal device to perform the steps of:
receiving (104), at said mobile terminal device, an over-the-air request message addressed to a subscriber identification associated with a subscriber identity module of said mobile terminal device and requesting subscriber preference information for said near field communication based service;
fetching (105) said requested subscriber preference information from a storage associated with said subscriber identity module; and
sending (106), from said mobile terminal device to said service management network element, a preferences message comprising said subscriber preference information.

17. A computer program for providing near field communication based services according to subscriber preferences, the computer program comprising instructions which, when run in a service management network element, cause the service management network element to perform the steps of:
receiving (102), at a service management network element, a service request message requesting a service associated with a tag identification associated with a near field communication tag and read with a mobile telephony enabled mobile terminal device, said service request message comprising said tag identification and a subscriber identification associated with a subscriber identity module of said mobile terminal device; and
mapping (103) said tag identification to a network address of its associated service;
**characterized in that** the instructions further cause the service management network element to perform the steps of:
sending (104), from said service management network element to said mobile terminal device, an over-the-air request message addressed to said subscriber identification and requesting subscriber preference information for said near field communication based service;
receiving (106), at said service management network element, a preferences message comprising said subscriber preference information; and
initializing (107) the provision of said requested service according to said received subscriber preference information.
